# EUROPÄISCHE PATENTSCHRIFT

(11) **EP 2 505 232 B1**
(45) Veröffentlichungstag und Bekanntmachung des Hinweises auf die Patenterteilung: **15.05.2019**
(21) Anmeldenummer: 12154595.8
(22) Anmeldetag: 09.02.2012
(51) Int. Cl.: A62C 3/16, A62C 2/06

(54) **Brandschutzmanschette**
Flame retardant sleeve
Manchette pare-feu

(30) Priorität: 28.03.2011 DE 102011006211
(43) Veröffentlichungstag der Anmeldung: 03.10.2012
(73) Patentinhaber: HILTI Aktiengesellschaft, 9494 Schaan (LI)
(72) Erfinder: Förg, Christian, 86862 Dillishausen (DE); Kögler, Markus, 86916 Kaufering (DE); Münzenberger, Herbert, 65191 Wiesbaden (DE)
(74) Vertreter: Hilti Aktiengesellschaft Corporate Intellectual Property

(56) Entgegenhaltungen:
- DE-A1- 10 003 856
- US-A1- 2006 010 798
- US-B1- 6 572 948
- US-B1- 6 725 615

## Beschreibung

### Technisches Gebiet

Die Erfindung betrifft eine Brandschutzmanschette mit einem Mantel aus einem brandfesten Material und einem Streifen aus Intumeszenzmaterial.

### Stand der Technik

Solche Brandschutzmanschetten sind in den verschiedensten Ausgestaltungen bekannt. Sie dienen dazu, im Brandfall Durchbrüche durch Wände, Decken oder Böden von Gebäuden zu verschließen, durch die brennbare oder schmelzende Rohre, Kabel oder Ähnliches hindurchgeführt sind. Zu diesem Zweck wird die Brandschutzmanschette um die Rohre oder Kabel herum angeordnet, so dass bei einem Brand das sich dann ausdehnende Intumeszenzmaterial den Durchbruch möglichst dicht verschließt. Dabei kann die Brandschutzmanschette entweder auf der Außenseite der Öffnung angeordnet sein, also beispielsweise an der Wand, durch die sich der Durchbruch hindurch erstreckt, oder aber bereits unmittelbar im Durchbruch, wenn dieser einen solchen Durchmesser hat, dass zwischen den Rohren oder Kabeln und der Öffnung noch ein ausreichender Freiraum zur Verfügung steht. Dokument US 6,725,615 offenbart eine im Fachgebiet bekannte Brandschutzmanschette.

Als Mantel für den Streifen aus Intumeszenzmaterial wird üblicherweise Blech verwendet. Mit einem solchen Mantel kann der im Brandfall erzeugte Blähdruck des Intumeszenzmaterials gut abgestützt werden, so dass gewährleistet ist, dass das Intumeszenzmaterial gerichtet dorthin expandiert, wo die Öffnung verschlossen werden soll. Nachteilig bei den bekannten Konstruktionen ist aber, dass der Mantel nicht sehr flexibel ist und insbesondere nur mit großem Aufwand vor Ort auf die gewünschten Abmessungen abgeschnitten werden kann.

Außerdem behindert ein Mantel aus Blech die Anpassung der Brandschutzmanschette bei engen Biegeradien und engen Platzverhältnissen.

### Darstellung der Erfindung

Die Aufgabe der Erfindung besteht darin, eine Brandschutzmanschette zu schaffen, die flexibler eingesetzt und vor Ort mit geringem Aufwand auf die jeweils benötigten Abmessungen abgelängt werden kann.

Zur Lösung dieser Aufgabe ist erfindungsgemäß vorgesehen, dass der Mantel aus einer flexiblen Matte besteht, die um mindestens einen der Längsränder des Intumeszenz-Streifens umgeschlagen ist, sodass die Matte den Intumeszenz-Streifen mindestens an einer Flachseite und einem der beiden Längsränder umgibt. Die Erfindung beruht auf der Erkenntnis, dass auch mit einem Mantel aus einer flexiblen Matte eine ausreichende Stütz- und Richtwirkung bereitgestellt werden kann, die im Brandfall dem Intumeszenz-Streifen zuverlässig die Richtung vorgibt, in der dieser expandieren soll. Dabei kann die Brandschutzmanschette aufgrund der flexiblen Matte ohne großen Aufwand an die jeweiligen Verhältnisse vor Ort angepasst werden, und die Länge der Brandschutzmanschette kann ohne großen Aufwand vor Ort dadurch angepasst werden, dass sie auf die benötigte Länge abgeschnitten wird.

Es ist vorgesehen, dass der Mantel ein Flächengewicht von mindestens 100 g/m² aufweist. Bei einem solchen Material ergibt sich die nötige Festigkeit, um den im Brandfall entstehenden Blähdruck des Intumeszenz-Streifens in die gewünschte Richtung zu lenken.

Die flexible Matte kann ein Gewebe oder ein Vlies sein. In beiden Fällen kann die Brandschutzmanschette vor Ort mit geringem Aufwand abgelängt werden, beispielsweise mit einer Schere, einer Blechschere oder einem Cuttermesser.

Vorzugsweise ist vorgesehen, dass der Mantel um beide Längsränder umgeschlagen ist. Dies verbessert die Richtwirkung des Mantels.

Gemäß einer Ausführungsform der Erfindung ist vorgesehen, dass der von der Längsseite auf die Flachseite umgeschlagene Umschlagrand eine Breite hat, die mindestens gleich der Hälfte der Dicke des Intumeszenz-Streifens ist. Diese Breite des Umschlagrandes gewährleistet, dass der Mantel, wenn der Intumeszenz-Streifen expandiert, mit seinen Rändern einen Kanal bildet, der die Expansionsrichtung des Intumeszenzmaterials vorgibt.

Vorzugsweise ist der Umschlagrand nicht breiter als 90 % der Breite des Intumeszenz-Streifens. Dies gewährleistet, dass die Expansion des Intumeszenzmaterials im Brandfall nicht durch den Umschlagrand beeinträchtigt wird.

Vorzugsweise ist vorgesehen, dass der Mantel entlang dem Längsrand des Intumeszenz-Streifens an diesem befestigt ist. Auf diese Weise wird verhindert, dass sich der Umschlagrand beim Expandieren des Intumeszenzmaterials vollständig öffnet. Stattdessen wird der Rand des Mantels in einem Winkel von etwa 90° zur Flachseite des Intumeszenz-Streifens fixiert, sodass der Mantel insgesamt eine Rinne bildet, aus der das Intumeszenzmaterial heraus gerichtet expandiert.

Der Mantel kann dabei mit dem Intumeszenz-Streifen vernäht sein oder durch Klammern mit diesem verbunden sein. Es ist auch möglich, den Mantel durch Niete mit dem Intumeszenz-Streifen zu verbinden.

Vorzugsweise erstreckt sich der Intumeszenz-Streifen noch mindestens 2 mm über eine Linie hinaus, entlang der der Mantel mit dem Intumeszenz-Streifen verbunden ist. Auf diese Weise wird der Mantel ausreichend fest mit dem Intumeszenz-Streifen verbunden, sodass dieser sich zu Beginn der Expansion nicht vom Mantel lösen kann.

Der Intumeszenz-Streifen kann auf den Mantel aufextrudiert sein. Auf diese Weise ergeben sich besonders geringe Herstellungskosten, da die Brandschutzmanschette in der Form eines kontinuierlichen, langen Streifens hergestellt und geliefert werden kann. Erst vor Ort wird die nötige Länge vom Streifen abgeschnitten, was aufgrund des für den Mantel verwendeten Materials mit geringem Aufwand möglich ist.

Der Intumeszenz-Streifen kann auch separat vom Mantel hergestellt und anschließend mit diesem verklebt werden. Auf diese Weise ergeben sich sehr geringe Herstellungskosten. Weiterhin ist es ohne Probleme möglich, die jeweils nötige Länge der Brandschutzmanschette von einem kontinuierlichen langen Streifen abzuschneiden, ohne dass auf eine durchgehende Naht geachtet werden muss. Zusammen mit einem geeigneten Halter für die Brandschutzmanschette kann auch bei einem geklebten Mantel gewährleistet werden, dass der Intumeszenzdruck in der gewünschten Richtung wirkt.

Für den Mantel der Brandschutzmanschette wird vorzugsweise ein Material verwendet, das eine Temperaturbeständigkeit bis mindestens 500 °C hat. Dies gewährleistet, dass die Stützfunktion des Mantels im Brandfall ausreichend lange erhalten bleibt.

Der Mantel kann insbesondere Fäden aus Glas, Stein, Keramik und/oder Metall enthalten. Auf diese Weise ergibt sich die gewünschte Temperaturbeständigkeit. Gemäß einer Ausgestaltung der Erfindung ist zwischen dem Mantel und dem Intumeszenzmaterial ein Metallstreifen eingelegt, der beispielsweise aus einer Metallfolie oder einem dünnen Metallblech besteht. Auf diese Weise lässt sich die Stützwirkung des Mantels erhöhen, ohne dass das Ablängen der Brandschutzmanschette merklich erschwert würde.

Die Erfindung wird nachfolgend anhand verschiedener Ausführungsformen beschrieben, die in den beigefügten Zeichnungen dargestellt sind. In diesen zeigen:
- Figur 1 in einer perspektivischen, geschnittenen Ansicht eine Brandschutzmanschette gemäß einer ersten Ausführungsform der Erfindung;
- Figur 2 in einer schematischen Draufsicht eine montierte Brandschutzmanschette;
- die Figuren 3 bis 7 in schematischen Schnittansichten Brandschutzmanschetten, die sich durch die Ausgestaltung des Mantels unterscheiden;
- Figur 8 schematisch die geometrischen Verhältnisse, wenn der Intumeszenz-Streifen aus dem Mantel heraus expandiert;
- Figur 9 in einer schematischen Schnittansicht eine Brandschutzmanschette gemäß einer weiteren Ausführungsform;
- Figur 10 in einer schematischen Ansicht eine Befestigungskralle, mit der die Brandschutzmanschette von Figur 9 befestigt werden kann; und
- Figur 11 in einer schematischen Schnittansicht die Brandschutzmanschette von Figur 8, die mit dem Halter von Figur 9 an einer Rohrdurchführung angebracht ist.

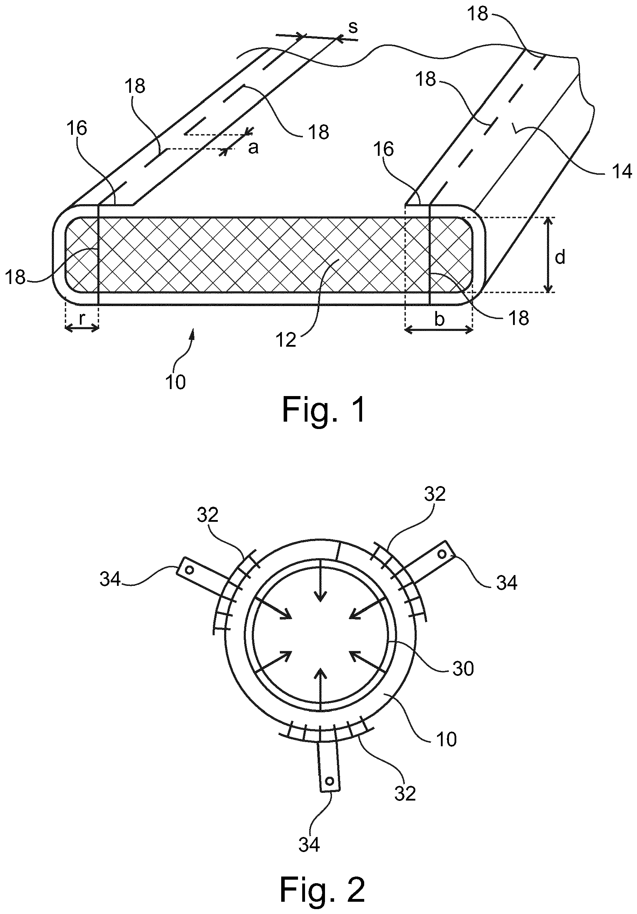

In Figur 1 ist eine streifenförmigen Brandschutzmanschette 10 gezeigt, die einen Streifen 12 aus Intumeszenzmaterial enthält. Bei dem Intumeszenzmaterial handelt es sich um eine herkömmliche Zusammensetzung, die beispielsweise in Polymer gebundene Wirksubstanzen wie Blähgrafit oder Ammoniumpolyphosphate enthält. Im gezeigten Ausführungsbeispiel hat der Intumeszenz-Streifen 12 einen rechteckigen Querschnitt mit beispielsweise einer Breite von 50 mm und einer Dicke von 5 mm.

Um den Intumeszenz-Streifen 12 herum ist ein Mantel 14 angeordnet, der aus einem Gewebe oder einem Vlies besteht. Der Mantel kann Fäden aus Glas, Stein, Keramik und/oder Metall enthalten. Der Mantel 14 ist bis zu einer Temperatur von mindestens 500 °C temperaturbeständig. Im Hinblick auf die gewünschte Festigkeit hat er ein Flächengewicht von mindestens 100 g/m².

Wie in Figur 1 zu sehen ist, erstreckt sich der Mantel 14 um eine Flachseite des Intumeszenz-Streifens 12 herum, dann um die beiden schmalen Längsränder bis auf die andere Flachseite. Bei der in Figur 1 gezeigten Ausführungsform erstreckt sich der Mantel 14 mit zwei schmalen Umschlagrändern 16 auf die Flachseite, die zur vollständig abgedeckten Flachseite (hier: der Unterseite) entgegengesetzt ist. Jeder der Umschlagränder 16 hat eine Breite b, die mindestens 50 % der Dicke d des Intumeszenz-Streifens beträgt. Zwischen den beiden Umschlagrändern 16 liegt der Intumeszenz-Streifen 12 frei.

Der Intumeszenz-Streifen 12 kann direkt auf das Material des Mantels 14 aufextrudiert werden oder aber mit diesem verklebt werden. Es ist grundsätzlich auch möglich, den Intumeszenz-Streifen 12 lose auf den Mantel 14 aufzulegen und dann die Ränder umzuschlagen. In jedem Fall ist der Intumeszenz-Streifen 12 mit dem Mantel 14 durch Befestigungsmittel 18 verbunden. Diese sind bei der in Figur 1 gezeigten Ausführungsform durch eine Naht gebildet. Aus Festigkeitsgründen haben die Stiche einen Mindestabstand r vom Außenrand des Intumeszenz-Streifens 12 von 2 mm. Derselbe Mindestabstand s wird vom freien Rand der Umschlagränder 16 eingehalten. Der Abstand a der Stiche voneinander kann zwischen 2 und 25 mm betragen.

Anstelle der Naht 18 können auch Metallklammern verwendet werden, die in geeigneten Abständen in den Intumeszenz-Streifen 12 hineingetrieben werden und den Umschlagrand 16 geeignet fixieren.

In Figur 2 ist die Brandschutzmanschette 10 schematisch angebracht an einem Rohr 30 dargestellt. Die Brandschutzmanschette 10 ist um den Außenumfang des Rohres 30 herumgelegt und wird dort von mehreren Haltern 32 fixiert, die aus Metallblech bestehen und jeweils eine Befestigungslasche 34 aufweisen, mit der sie an einer Wand, einem Boden oder einer Decke befestigt werden können, durch die das Rohr 30 hindurchgeführt wird. Im Brandfall expandiert das Intumeszenzmaterial aufgrund der einwirkenden Wärme, sodass es die Öffnung verschließt, durch die das Rohr 30 hindurchgeführt wird.

Aufgrund der besonders hohen Flexibilität der erfindungsgemäßen Brandschutzmanschette können auch Leitungen oder Kabel mit sehr geringem Durchmesser umwickelt werden.

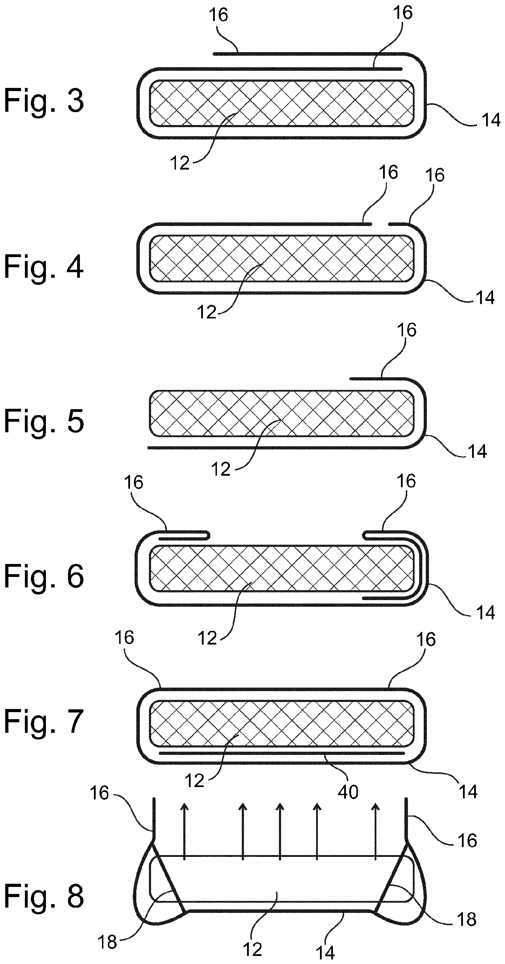

In Figur 3 ist eine alternative Ausgestaltung des Mantels 14 gezeigt. Im Unterschied zu der in Figur 1 gezeigten Ausführungsform sind hier die beiden Umschlagränder 16 sehr breit ausgeführt. Um das Expandieren des Intumeszenz-Streifens 12 nicht zu behindern, beträgt die Breite der Umschlagränder 16 vorzugsweise nicht mehr als 90 % der Breite des Intumeszenz-Streifens 12.

Bei der in Figur 3 gezeigten Ausführungsform ist es unter Umständen möglich, auf eine Befestigung der Umschlagränder 16 am Intumeszenz-Streifen 12 durch separate Nähte oder Klammern zu verzichten. Insbesondere durch Verkleben der Umschlagränder 16 mit dem Intumeszenz-Streifen 12 kann eine ausreichende Richtwirkung auch ohne Nähte oder Klammern erzielt werden.

In Figur 4 ist eine Ausführungsform gezeigt, bei welcher der Mantel 14 asymmetrisch um den Intumeszenz-Streifen 12 herumgeschlagen ist.
Bei der Ausführungsform in Figur 5 ist der Umschlagrand 16 nur an einer Seite angeordnet. Diese Ausführungsform kann bei Anwendungsfällen eingesetzt werden, bei denen das Intumeszenzmaterial auf der Seite, auf der kein Umschlagrand vorhanden ist, anderweitig abgestützt ist, beispielsweise durch eine Mauer, an der es eng anliegt.

Bei der in Figur 6 gezeigten Ausführungsform sind die Umschlagränder 16 doppellagig ausgeführt. Dies führt zu einer besonders hohen Festigkeit, sodass die Naht 18 auch sehr nahe am Rand der Umschlagränder angeordnet werden kann.

Bei der in Figur 7 gezeigten Ausführungsform ist zwischen dem Mantel 14 und der Flachseite des Intumeszenz-Streifens 12, die vollständig vom Mantel umgeben ist, ein Metallstreifen 40 angeordnet, der für eine höhere Festigkeit des Mantels insgesamt sorgt.

In Figur 8 ist schematisch die Funktion des Mantels 14 verdeutlicht, den dieser im Brandfall hat, wenn das Intumeszenzmaterial expandiert. Die Naht 18 hält den Umschlagrand 16 entgegen dem am Rand wirkenden Blähdruck am Intumeszenz-Streifen 12, sodass insgesamt ein rinnen- oder kanalförmiger Querschnitt des Mantels 14 erhalten wird, durch den die Blähwirkung von der Seite weg gerichtet wird, die vollständig vom Mantel 14 umgeben ist (hier: nach oben). Durch geeignete Ausführung der Naht 18 kann dabei an den Rändern des Mantels eine im weitesten Sinne rechtwinklige Querschnittsform des Mantels eingestellt werden. Auf diese Weise übt der Mantel 14 eine Richt- und Stützwirkung aus, die mit derjenigen eines Blechmantels vergleichbar ist.

Die mechanische Festigkeit der Naht 18 muss dabei so ausgelegt werden, dass die Naht dem entstehenden Blähdruck widersteht. Außerdem muss die Naht die nötige Temperaturbeständigkeit haben. Insbesondere sollte sie in gleicher Weise wie die Matte bis zu Temperaturen von mindestens 500 °C intakt bleiben. Die konkrete Ausgestaltung der Naht, also ein-, zwei- oder dreifädige Nähte, gerade Stiche, Zickzack-Stiche, etc. ist grundsätzlich ohne Bedeutung, solange die Naht unter der Wirkung des Blähdrucks für die gewünschte Stabilisierung des Randbereichs des Mantels 14 sorgt.

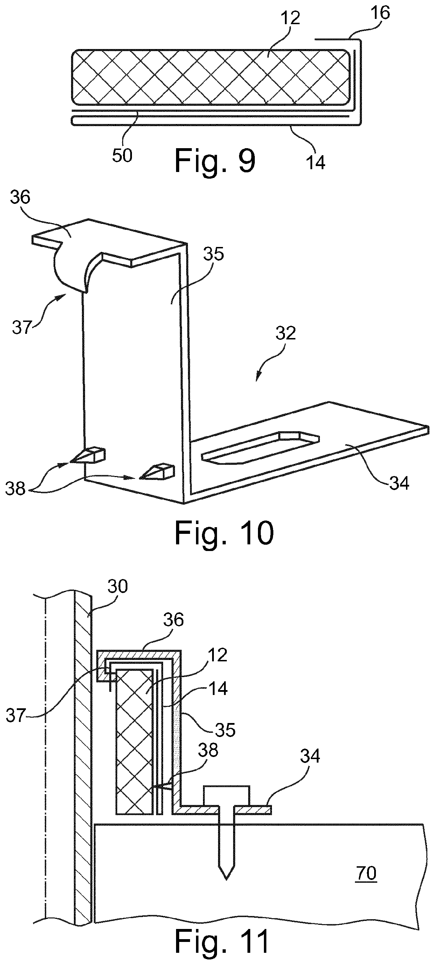

In Figur 9 ist eine Ausführungsform gezeigt, bei der der Mantel 14 sich ähnlich wie bei der Ausführungsform gemäß Figur 5 nur um einen der schmalen Längsränder erstreckt. Im Unterschied zur Ausführungsform von Figur 5 ist der Mantel 14 auf der Flachseite des Intumeszenz-Streifens 12 doppellagig ausgeführt, wobei das freie Ende des Mantels nach innen eingeschlagen ist. Dadurch besteht kein Risiko, dass der Rand des Mantels 14 ausfranst.

Bei dieser Ausführungsform ist der Mantel 14 mit dem Intumeszenz-Streifen 12 verklebt (siehe die Klebstoffschicht 50, die sich über die Flachseite und einen der schmalen Längsränder des Intumeszenz-Streifens 12 erstreckt).

Damit gewährleistet wird, dass bei der Ausführungsform mit verklebtem Mantel der Blähdruck zuverlässig in die gewünschte Richtung wirkt, werden mehrere Halter 32 verwendet, die in Umfangsrichtung um die Brandschutzmanschette verteilt angeordnet sind, wie in Figur 2 gezeigt. Der Halter 32 (siehe auch Figur 10) besteht aus Blech und weist einen Abstützabschnitt 35 sowie einen Verankerungsabschnitt 36 auf. Der Abstützabschnitt 35 erstreckt sich entlang der außenliegenden Flachseite des Intumeszenz-Streifens 12 und stützt den doppellagigen Mantel 14. Der Verankerungsabschnitt 36 umgreift die schmale Längsseite des Intumeszenz-Streifens 12 und den Umschlagrand 16. Zur Verbesserung des mechanischen Halts ist ein Dorn 37 am freien Ende des Verankerungsabschnitts 36 vorgesehen, der den Mantel 14 am Intumeszenz-Streifen 12 hält. Weiterhin können Dorne 38 am Abstützabschnitt 35 vorgesehen sein, die den Mantel 14 an der Flachseite des Intumeszenz-Streifens fixieren.

Da der Mantel 14 auf der Flachseite des Intumeszenz-Streifens 12 doppellagig verwendet wird, kann für den Mantel ein Gewebe mit einem geringeren Flächengewicht verwendet werden. Dies hat den Vorteil, dass die Brandschutzmanschette besser um das Rohr bzw. die Leitung(en) gebogen werden kann, da der Mantel auf der dem Rohr bzw. den Leitungen zugewandten Seite dünner ist als auf der außenliegenden Seite. Weil der Mantel, wenn die Brandschutzmanschette 10 an einem Rohr bzw. einem Leitungsstrang angebracht wird, um zwei unterschiedliche Biegekanten mit unterschiedlichen Radien gebogen bzw. gerollt werden muss, macht sich eine Verringerung des Flächengewichts sehr stark positiv bemerkbar. Ein weiterer Vorteil dieser Ausführungsform besteht darin, dass aufgrund des geringeren Flächengewichts die Kosten für das Gewebe geringer sind. Aufgrund des Zusammenwirkens mit dem Halter 32 ist aber auch bei einem "leichteren" Gewebe die nötige Stabilität gegen den auftretenden Intumeszenzdruck gewährleistet. Die Doppellagigkeit des Mantels 14 erhöht dabei die Reißfestigkeit an der Einstichstelle der Dorne 38.

Der Halter 32 gewährleistet im Zusammenwirken mit dem Mantel 14, dass der Blähdruck in radialer Richtung nach innen wirkt, da der Verankerungsabschnitt 36 zusammen mit dem Umschlagrand 16 eine Expansion des Intumeszenz-Streifens 12 in axialer Richtung verhindert oder wenigstens stark behindert.

Der Umfang der Erfindung wird durch die beigefügten Ansprüche definiert.

## Patentansprüche

1. Brandschutzmanschette (10) aus einem Mantel (14) aus einem brandfesten Material und einem Streifen (12) aus Intumeszenzmaterial, wobei der Mantel (14) aus einer flexiblen Matte besteht, die um mindestens einen der Längsränder des Intumeszenz-Streifens (12) umgeschlagen ist, sodass der Mantel (14) den Intumeszenz-Streifen (12) mindestens an einer Flachseite und einem der beiden Längsränder umgibt, **dadurch gekennzeichnet, dass** die flexible Matte ein Gewebe oder ein Vlies ist und ein Flächengewicht von mindestens 100 g/m² aufweist

2. Brandschutzmanschette nach Anspruch 1, **dadurch gekennzeichnet, dass** der Mantel (14) um beide Längsränder umgeschlagen ist.

3. Brandschutzmanschette nach Anspruch 1 oder Anspruch 2, **dadurch gekennzeichnet, dass** der von der Längsseite auf die Flachseite umgeschlagene Umschlagrand (16) eine Breite (b) hat, die mindestens gleich der Hälfte der Dicke (d) des Intumeszenz-Streifens (12) ist.

4. Brandschutzmanschette nach einem der vorhergehenden Ansprüche, **dadurch gekennzeichnet, dass** der Umschlagrand (16) nicht breiter als 90 % der Breite des Intumeszenz-Streifens ist.

5. Brandschutzmanschette nach einem der vorhergehenden Ansprüche, **dadurch gekennzeichnet, dass** der Mantel (14) entlang dem Längsrand des Intumeszenz-Streifens (12) an diesem befestigt ist.

6. Brandschutzmanschette nach Anspruch 5, **dadurch gekennzeichnet, dass** der Mantel (14) mit dem Intumeszenz-Streifen (12) vernäht ist.

7. Brandschutzmanschette nach Anspruch 5, **dadurch gekennzeichnet, dass** der Mantel (14) durch Klammern mit dem Intumeszenz-Streifen (12) verbunden ist.

8. Brandschutzmanschette nach Anspruch 5, **dadurch gekennzeichnet dass** der Mantel (14) durch Niete mit dem Intumeszenz-Streifen (12) verbunden ist.

9. Brandschutzmanschette nach einem der Ansprüche 5 bis 8, **dadurch gekennzeichnet, dass** sich der Intumeszenz-Streifen (12) noch mindestens 2 mm über eine Linie hinaus erstreckt, entlang der der Mantel (14) mit dem Intumeszenz-Streifen (12) verbunden ist.

10. Brandschutzmanschette nach einem der vorhergehenden Ansprüche, **dadurch gekennzeichnet, dass** der Intumeszenz-Streifen (12) auf den Mantel (14) aufextrudiert ist.

11. Brandschutzmanschette nach einem der Ansprüche 1 bis 9, **dadurch gekennzeichnet, dass** der Intumeszenz-Streifen (12) mit dem Mantel (14) verklebt ist.

12. Brandschutzmanschette nach Anspruch 11, **dadurch gekennzeichnet, dass** der Mantel (14) auf der Flachseite des Intumeszenz-Streifens (12) doppellagig ist.

13. Brandschutzmanschette nach einem der vorhergehenden Ansprüche, **dadurch gekennzeichnet, dass** der Mantel (14) eine Temperaturbeständigkeit bis mindestens 500 °C hat.

14. Brandschutzmanschette nach einem der vorhergehenden Ansprüche, **dadurch gekennzeichnet, dass** der Mantel (14) Fäden aus Glas, Stein, Keramik und/oder Metall enthält.

15. Brandschutzmanschette nach einem der vorhergehenden Ansprüche, **dadurch gekennzeichnet, dass** zwischen dem Mantel (14) und dem Intumeszenz-Streifen (12) ein Metallstreifen (40) eingelegt ist.

16. Brandschutzmanschette nach Anspruch 15, **dadurch gekennzeichnet, dass** der Metallstreifen (40) aus einer Metallfolie oder einen Metallblech besteht.

## Claims

1. Fire protection sleeve (10) made of a casing (14) made of a fire-resistant material and a strip (12) made of intumescent material, in which the casing (14) consists of a flexible mat, which is wrapped around at least one of the longitudinal edges of the intumescent strip (12), so that the casing (14) surrounds the intumescent strip (12) at least on one flat side and one of the two longitudinal edges, **characterised in that** the flexible mat is a woven fabric or a fleece and has an area weight of at least 100 g/m².

2. Fire protection sleeve according to claim 1, **characterised in that** the casing (14) is wrapped around both longitudinal edges.

3. Fire protection sleeve according to claim 1 or claim 2, **characterised in that** the wrapping edge (16) wrapped around the longitudinal edge on the flat side has a width (b), which is at least equal to half the thickness (d) of the intumescent strip (12).

4. Fire protection sleeve according to one of the previous claims, **characterised in that** the wrapping edge (16) is not wider than 90% of the width of the intumescent strip.

5. Fire protection sleeve according to one of the previous claims, **characterised in that** the casing (14) is fastened to the intumescent strip (12) along its longitudinal edge.

6. Fire protection sleeve according to claim 5, **characterised in that** the casing (14) is sewn to the intumescent strip (12).

7. Fire protection sleeve according to claim 5, **characterised in that** the casing (14) is connected to the intumescent strip (12) with clips.

8. Fire protection sleeve according to claim 5, **characterised in that** the casing (14) is connected to the intumescent strip (12) with rivets.

9. Fire protection sleeve according to one of claims 5 to 8, **characterised in that** the intumescent strip (12) extends at least 2 mm beyond a line, along which the casing (14) is connected to the intumescent strip (12).

10. Fire protection sleeve according to one of the previous claims, **characterised in that** the intumescent strip (12) is extruded on the casing (14).

11. Fire protection sleeve according to one of claims 1 to 9, **characterised in that** the intumescent strip (12) is stuck to the casing (14).

12. Fire protection sleeve according to claim 11, **characterised in that** the casing (14) has a double layer on the flat side of the intumescent strip (12).

13. Fire protection sleeve according to one of the previous claims, **characterised in that** the casing (14) has a heat resistance of at least 500° C.

14. Fire protection sleeve according to one of the previous claims, **characterised in that** the casing (14) contains threads made of glass, stone, ceramic and/or metal.

15. Fire protection sleeve according to one of the previous claims, **characterised in that** a metal strip (40) is inserted between the casing (14) and the intumescent strip (12).

16. Fire protection sleeve according to claim 15, **characterised in that** the metal strip (40) consists of a metal foil or a metal sheet.

## Revendications

1. Manchette pare-feu (10) constituée d'une enveloppe (14) en matériau résistant au feu et d'une bande (12) en matériau intumescent, dans laquelle l'enveloppe (14) est constituée d'un mat flexible qui est rabattu autour d'au moins un des bords longitudinaux de la bande intumescente (12) de telle sorte que l'enveloppe (14) entoure la bande intumescente (12) au moins sur un côté plat et l'un des deux bords longitudinaux, **caractérisée en ce que** le mat flexible est une étoffe tissée ou un non-tissé et a un grammage d'au moins 100 g/m².

2. Manchette pare-feu selon la revendication 1, **caractérisée en ce que** l'enveloppe (14) est rabattue autour des deux bords longitudinaux.

3. Manchette pare-feu selon la revendication 1 ou la revendication 2, **caractérisée en ce que** le bord de rabat (16) rabattu sur le côté plat à partir du côté longitudinal a une largeur (b) qui est au moins égale à la moitié de l'épaisseur (d) de la bande intumescente (12).

4. Manchette pare-feu selon l'une des revendications précédentes, **caractérisée en ce que** le bord rabattu (16) n'est pas plus large que 90 % de la largeur de la bande intumescente.

5. Manchette pare-feu selon l'une des revendications précédentes, **caractérisée en ce que** l'enveloppe (14) est fixée à celle-ci le long du bord longitudinal de la bande intumescente (12).

6. Manchette pare-feu selon la revendication 5, **caractérisée en ce que** l'enveloppe (14) est fermée par couture avec la bande intumescente (12)

7. Manchette pare-feu selon la revendication 5, **caractérisée en ce que** l'enveloppe (14) est reliée à la bande intumescente (12) par des agrafes.

8. Manchette pare-feu selon la revendication 5, **caractérisée en ce que** l'enveloppe (14) est reliée à la bande intumescente (12) par des rivets.

9. Manchette pare-feu selon l'une des revendications 5 à 8, **caractérisée en ce que** la bande intumescente (12) s'étend encore au moins 2 mm au-delà d'une ligne le long de laquelle l'enveloppe (14) est reliée à la bande intumescente (12).

10. Manchette pare-feu selon l'une des revendications précédentes, **caractérisée en ce que** la bande intumescente (12) est extrudée sur l'enveloppe (14).

11. Manchette pare-feu selon l'une des revendications 1 à 9, **caractérisée en ce que** la bande intumescente (12) est collée à l'enveloppe (14).

12. Manchette pare-feu selon la revendication 11, **caractérisée en ce que** l'enveloppe (14) a deux couches sur le côté plat de la bande intumescente (12).

13. Manchette pare-feu selon l'une des revendications précédentes, **caractérisée en ce que** l'enveloppe (14) est résistante à une température allant jusqu'à au moins 500 °C.

14. Manchette pare-feu selon l'une des revendications précédentes, **caractérisée en ce que** l'enveloppe (14) contient des filaments de verre, de la pierre, une céramique et/ou un métal.

15. Manchette pare-feu selon l'une des revendications précédentes, **caractérisée en ce qu'**une bande de métal (40) est insérée entre l'enveloppe (14) et la bande intumescente (12).

16. Manchette pare-feu selon la revendication 15, **caractérisée en ce que** la bande de métal (40) est constituée d'une feuille de métal ou d'une tôle de métal.
